# EUROPÄISCHE PATENTSCHRIFT

(11) **EP 2 167 304 B1**
(45) Veröffentlichungstag und Bekanntmachung des Hinweises auf die Patenterteilung: **31.10.2012**
(21) Anmeldenummer: 08786079.7
(22) Anmeldetag: 11.07.2008
(51) Int. Cl.: B29C 67/00, B22F 3/105

(54) **COMPUTERPROGRAMM, STEUEREINRICHTUNG UND VORRICHTUNG ZUM AUFBRINGEN EINER AUS MEHREREN MATERIALIEN BESTEHENDEN PRODUKTSCHICHT AUF EINEN FORMKÖRPER**
COMPUTER PROGRAM, CONTROLLER AND APPARATUS FOR APPLYING A PRODUCT LAYER CONSISTING OF A PLURALITY OF MATERIALS TO A MOLDED BODY
PROGRAMME D'ORDINATEUR, DISPOSITIF DE COMMANDE ET DISPOSITIF D'APPLICATION D'UNE COUCHE DE PRODUIT COMPOSÉE DE PLUSIEURS MATÉRIAUX SUR UN CORPS MOULÉ

(30) Priorität: 19.07.2007 DE 102007033715
(43) Veröffentlichungstag der Anmeldung: 31.03.2010
(73) Patentinhaber: Siemens Aktiengesellschaft, 80333 München (DE)
(72) Erfinder: BOTT, Erich, 97618 Hollstadt (DE); POTORADI, Detlef, 97616 Bad Neustadt/Saale (Mühlbach) (DE); VOLLMER, Rolf, 36129 Gersfeld (DE)
(86) Internationale Anmeldenummer: PCT/EP2008/059081
(87) Internationale Veröffentlichungsnummer: WO 2009/010462

(56) Entgegenhaltungen:
- US-A- 5 398 193
- US-A1- 2003 074 096
- US-B1- 6 682 688

## Beschreibung

Die vorliegende Erfindung betrifft das sequentielle Aufbringen von Produktschichten auf einen in einer Aufnahmeform befindlichen Formkörper.

Derartige Verfahren sind bekannt. Rein beispielhaft wird auf die US 6 861 613 B1 verwiesen. Im Rahmen des aus der US 6 861 613 B1 bekannten Verfahrens ist vorgesehen,
- dass jede Produktschicht aus einer Anzahl von Materialien besteht,
- dass zum Aufbringen einer jeweiligen Produktschicht auf den Formkörper nacheinander jeweils eine aus einem jeweiligen Material bestehende Pulverschicht aufgebracht wird und die aufgebrachte Pulverschicht an Stellen, an denen die jeweilige Produktschicht aus dem jeweiligen Material bestehen soll, mittels eines Lasers aufgeschmolzen wird,
- dass das Aufbringen einer aus einem jeweiligen Material bestehenden Pulverschicht und deren Aufschmelzen mit einem jeweils neuen Material wiederholt wird, bis die jeweilige Produktschicht fertiggestellt ist,
- dass vor dem Aufbringen eines von dem aufgeschmolzenen Material verschiedenen Materials nicht aufgeschmolzenes Pulver des bereits aufgebrachten jeweiligen Materials entfernt wird und
- dass innerhalb jeder Produktschicht die Stellen, an denen voneinander verschiedene Materialien aufgebracht werden, zueinander disjunkt sind.

Aus der US 5 398 193 A ist ein Verfahren zum Aufbringen einer ersten Produktschicht auf einen in einer Aufnahmeform befindlichen Formkörper bekannt. Bei diesem Verfahren wird in einem ersten Schritt auf den Formkörper eine aus einem ersten Material bestehende erste Pulverschicht aufgebracht. In einem weiteren Schritt wird die erste Pulverschicht verarbeitet.

Das Verarbeiten kann in einem Aufschmelzen bestehen. Sodann wird auf den Formkörper eine aus einem zweiten Material bestehende zweite Pulverschicht aufgebracht. Im nächsten Schritt wird die zweite Pulverschicht verarbeitet. Das erste und das zweite Material sind voneinander verschiedene Materialien. Die zweiten Stellen sind zu den ersten Stellen disjunkt.

Aus der US 2003/074 096 A1 ist ebenfalls ein Verfahren zum Aufbringen einer ersten Produktschicht auf einen in einer Aufnahmeform befindlichen Formkörper bekannt. Bei diesem Verfahren wird in einem ersten Schritt auf den Formkörper eine aus verschiedenen Materialien bestehende erste Pulverschicht aufgebracht. In einem weiteren Schritt wird die erste Pulverschicht mittels eines Lasers aufgeschmolzen. Das erste und das zweite Material sind voneinander verschiedene Materialien. Die zweiten Stellen sind zu den ersten Stellen disjunkt.

Allgemein gesprochen, werden Produkteigenschaften durch Materialeigenschaften und geometrische Formen realisiert. Zur Realisierung der Produkteigenschaften ist es erforderlich, das jeweils verwendete Material in eine bestimmte Form zu bringen und die so erhaltene Form mit anderen Materialien, welche ebenfalls in eine entsprechende Form gebracht werden, zu kombinieren. Auf diese Weise werden Teile größerer Produkte, Baugruppen und komplette Produkte hergestellt. Die Formgebung dieser Vorgehensweise ist jedoch in vielen Fällen durch technologische Grenzen eingeschränkt, so dass eine weitere Produktverbesserung ausgeschlossen ist bzw. kürzere Fertigungszeiten nicht möglich sind.

Im Stand der Technik ist es bekannt, einzelne (oftmals dreidimensional ge- und verformte) Teile herzustellen und die Teile miteinander zu verbinden. Im Stand der Technik ist weiterhin bekannt, mehrere Materialien miteinander zu fügen. Für diese Vorgehensweise werden beispielsweise Kunststoffspritzgießen mit eingelegten Formteilen, der Mehrkomponentenspritzguss, das Eingießen eines Formteils mit einem zweiten, flüssigen Material, die Einpassung von Festkörperformteilen in andere Festkörperformteile und andere Vorgehensweisen eingesetzt. In allen diesen Fällen ist eine weitere Optimierung der Produkteigenschaften jedoch nur in begrenztem Umfang möglich.

Die Entwicklung neuer Komponenten erfolgt heutzutage in aller Regel nicht mehr am Reißbrett, sondern rechnergestützt mittels CAD-Systemen. Anhand eines auf diese Weise erstellten CAD-Datensatzes kann automatisiert ein Modell der neuen Komponente erstellt werden. Das Erstellen des Modells kann beispielsweise durch sogenanntes Lasersintern erfolgen. Zum Lasersintern wird zunächst eine erste Pulverschicht auf einen Untergrund aufgebracht. Die erste Pulverschicht wird an ersten Stellen mittels eines Lasers aufgeschmolzen. Sodann wird auf die jeweils zuletzt gefertigte Schicht eine neue Pulverschicht aufgetragen und an für die neu aufgetragene Schicht spezifischen Stellen mittels des Lasers aufgeschmolzen. Diese Schrittfolge wird wiederholt, bis das Modell des Produkts hergestellt ist. Sodann wird nicht aufgeschmolzenes Pulver entfernt.

Bei diesem Stand der Technik bestehen alle Pulverschichten aus dem gleichen Material, in der Regel aus Kunststoff. Es wird daher mittels dieser bekannten Vorgehensweise - zumindest in der Regel - nur ein Modell des eigentlichen Produkts hergestellt, nicht aber das Produkt selbst.

Die Aufgabe der vorliegenden Erfindung besteht darin, Möglichkeiten zu schaffen, mittels derer ein nahezu beliebiges Produkt auf einfache, flexible und effiziente Weise herstellbar ist.

Die Aufgabe wird durch ein Computerprogramm mit den Merkmalen des Anspruchs 1, eine Steuereinrichtung mit den Merkmalen des Anspruchs 8 und eine Vorrichtung mit den Merkmalen des Anspruchs 9 gelöst. Vorteilhafte Ausgestaltungen der vorliegenden Erfindung sind Gegenstand der abhängigen Ansprüche 2 bis 7.

Erfindungsgemäß wird geprüft, ob die zuerst aufzubringende Pulverschicht einer jeweiligen Produktschicht aus demselben Material besteht wie die zuletzt aufgebrachte Pulverschicht der unmittelbar zuvor aufgebrachten Produktschicht. Wenn dies der Fall ist, wird das Pulver der zuerst aufzubringenden Pulverschicht einer jeweiligen Produktschicht aufgebracht, ohne zuvor das nicht aufgeschmolzene Pulver der zuletzt aufgebrachten Pulverschicht der unmittelbar zuvor aufgebrachten Produktschicht zu entfernen.

Vorzugsweise wird die Reihenfolge, in der die einzelnen Pulverschichten aufgebracht werden, derart gewählt, dass die zuerst aufgebrachte Pulverschicht einer jeweiligen Produktschicht aus demselben Material besteht wie die zuletzt aufgebrachte Pulverschicht der unmittelbar zuvor aufgebrachten Produktschicht.

Vorzugsweise bestrahlt der Laser die jeweiligen Pulverschichten zum Aufschmelzen mit einer auf das Material der jeweiligen Pulverschicht abgestimmten Laserenergie. Die Laserenergie ist daher für den jeweiligen Aufschmelzvorgang optimiert. Die Energie des Lasers kann hierbei durch verschiedene Faktoren - einzeln oder kombiniert - eingestellt werden. Beispielsweise können die Intensität oder eine Verschwenkgeschwindigkeit des erzeugten Laserstrahls variiert werden. Alternativ oder zusätzlich kann beispielsweise bei Pulsbetrieb der duty cycle variiert werden. Unter Umständen kann es sogar möglich sein, die Wellenlänge des Laserlichts zu variieren.

Wenn das aufzuschmelzende Material einer Pulverschicht das gleiche Material ist wie das unter der Pulverschicht befindliche Material, ergibt sich ohne weiteres eine feste Verbindung des aufgeschmolzenen Materials mit dem darunter befindlichen Material. Eine derartige feste Verbindung ist in vielen Fällen gewünscht, in manchen Fällen hingegen nicht gewünscht (beispielsweise wenn eine Beweglichkeit zweier Teile zueinander möglich sein soll). Wenn umgekehrt die Materialien voneinander verschieden sind, kann in manchen Fällen eine feste Verbindung nicht ohne weiteres möglich sein. In vielen Fällen ist jedoch eine feste Verbindung gewünscht. Aus diesen Gründen wird vorzugsweise vor dem Aufbringen jeder Pulverschicht für jede Stelle, an denen die jeweilige Pulverschicht aufgeschmolzen werden soll, geprüft, ob eine Vorbehandlung der jeweiligen Stelle erforderlich ist. In Abhängigkeit von dem Ergebnis der Prüfung wird sodann eine entsprechende Vorbehandlung der jeweiligen Stelle vorgenommen. Die Vorbehandlung kann hierbei für mindestens eine Stelle in Abhängigkeit davon vorgenommen werden, ob die an der jeweiligen Stelle aufzuschmelzende Pulverschicht sich mit dem darunter liegenden Material verbinden soll oder nicht. Die Vorbehandlung kann beispielsweise in einer Bestrahlung durch den Laser oder einem Aufbringen eines dünnen Films bestehen.

Es ist möglich, dass der Formkörper bereits selbst gemäß einem derartigen Verfahren hergestellt ist. Alternativ ist es beispielsweise möglich, dass der Formkörper durch Zerspanen oder durch Gießen hergestellt ist.

Die Vorrichtung zum sequentiellen Aufbringen von Produktschichten auf den Formkörper weist eine Aufnahmeform auf, in der sich der Formkörper während des Aufbringens der Produktschichten befindet. Die Vorrichtung weist weiterhin eine Aufbringeinrichtung auf, mittels derer im Betrieb der Vorrichtung auf dem Formkörper eine aus einem jeweiligen Material bestehende Pulverschicht aufgebracht wird. Weiterhin weist die Vorrichtung einen Laser auf, mittels dessen im Betrieb der Vorrichtung die jeweils aufgebrachte Pulverschicht an Stellen, an denen die jeweilige Produktschicht aus dem jeweiligen Material bestehen soll, aufgeschmolzen wird. Weiterhin weist die Vorrichtung eine Säuberungseinrichtung auf, mittels derer im Betrieb der Vorrichtung nicht aufgeschmolzenes Pulver entfernt wird. Weiterhin weist die Vorrichtung eine Mehrzahl von Vorratsbehältern für Pulver je eines Materials auf. Aus diesen Behältern ist die Aufbringeinrichtung selektiv beschickbar. Schließlich weist die Vorrichtung eine Steuereinrichtung auf, die bewirkt, dass die Vorrichtung im Betrieb ein Verfahren der obenstehend beschriebenen Art ausführt. Die Steuereinrichtung ist somit ein wesentliches Element der erfindungsgemäßen Vorrichtung, welche auch eigenständig wesentliche Merkmale der vorliegenden Erfindung realisiert.

Weitere Vorteile und Einzelheiten ergeben sich aus der nachfolgenden Beschreibung von Ausführungsbeispielen in Verbindung mit den Zeichnungen. Es zeigen in Prinzipdarstellung
- FIG 1: eine Vorrichtung zum Aufbringen von Produktschichten auf einen Formkörper,
- FIG 2 und 3: beispielhaft zwei vorgeformte Körper,
- FIG 4 bis 6: Ablaufdiagramme und
- FIG 7: beispielhaft ein erfindungsgemäß hergestelltes Produkt.

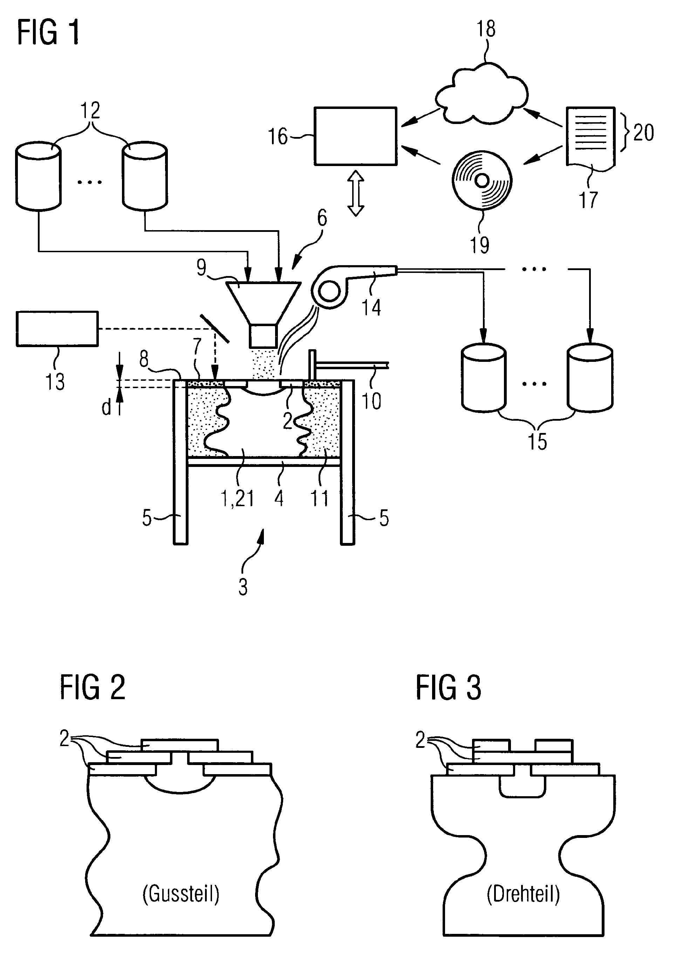

Mittels der in FIG 1 dargestellten Vorrichtung soll auf einen Formkörper 1 eine erste Produktschicht 2 aufgebracht werden. Zu diesem Zweck weist die Vorrichtung eine Aufnahmeform 3 auf, in der sich der Formkörper 1 während des Aufbringens der ersten Produktschicht 2 befindet. Die Aufnahmeform 3 kann beispielsweise topfartig ausgebildet sein. Sie kann einen beweglichen Boden 4 aufweisen, der entlang von ortsfesten Seitenwänden 5 absenkbar ist. Das Absenken erfolgt hierbei in kleinen Schritten von beispielsweise 20 bis 300 µm, insbesondere von 50 bis 100 µm. Die Schrittweite kann fest vorgegeben sein oder - beispielsweise von einem Anwender - stufenlos oder in Schritten parametrierbar sein. Die Schrittweite entspricht einer Dicke d der ersten Produktschicht 2 bzw. weiterer Produktschichten 2.

Die Vorrichtung weist weiterhin eine Aufbringeinrichtung 6 auf, mittels derer im Betrieb der Vorrichtung auf den Formkörper 1 eine aus einem jeweiligen Material bestehende Pulverschicht 7 aufgebracht wird. Das Aufbringen der Pulverschicht 7 kann beispielsweise dadurch erfolgen, dass der Formkörper 1 um die gewünschte Dicke d der Produktschicht 2 unter einen Rand 8 der Aufnahmeform 3 abgesenkt wird und sodann mit der Pulverschicht 7 bis zum Rand 8 gefüllt wird. Die Aufbringeinrichtung 6 kann zu diesem Zweck beispielsweise einen Ausgießstutzen 9 und ein Rakel 10 aufweisen. In diesem Fall wird die Pulverschicht 7 zunächst mittels des Ausgießstutzens 9 auf den Formkörper 1 aufgegeben. Sodann wird überschüssiges Pulvermaterial 11 mittels des Rakels 10 abgestrichen bzw. abgestreift, so dass die Aufnahmeform 3 nach dem Abstreifen bis zum Rand 8 gefüllt ist.

Die Aufbringeinrichtung 6 wirkt mit einer Mehrzahl von Vorratsbehältern 12 zusammen, aus denen die Aufbringeinrichtung 6 selektiv beschickbar ist. In jeden Vorratsbehälter 12 ist Pulver 11 je eines Materials eingefüllt, beispielsweise in je einen der Vorratsbehälter 12 Kupfer, Eisen, ein erster Kunststoff (beispielsweise ein Polyamid), ein zweiter Kunststoff (beispielsweise ein Polyurethan) usw. Die Materialien unterscheiden sich somit voneinander. Für jedes Material ist hierbei ein eigener Vorratsbehälter 12 vorgesehen. Bei jedem Material kann es sich alternativ um ein Reinmaterial (Beispiele vorstehend) oder um eine definierte Mischung (beispielsweise Kunststoff mit einem Anteil von x Prozent Eisen) handeln.

Die Vorrichtung weist weiterhin einen Laser 13 auf. Mittels des Lasers 13 ist im Betrieb der Vorrichtung die jeweils aufgebrachte Pulverschicht 7 an Stellen, an denen die erste Produktschicht 2 aus dem jeweiligen Material bestehen soll, aufgeschmolzen.

Nach dem Aufschmelzen verbleibt in der Regel Pulver 11 in der Pulverschicht 7, welches nicht aufgeschmolzen ist. Zum Entfernen dieses Pulvers 11 weist die Vorrichtung eine Säuberungseinrichtung 14 auf. Beispielsweise kann die Säuberungseinrichtung 14 als Absaugeinrichtung ausgebildet sein. Gegebenenfalls kann sie alternativ oder zusätzlich ein Gebläse aufweisen.

Es ist möglich, entferntes, nicht aufgeschmolzenes Pulver 11 stets einem gemeinsamen Sammelbehälter zuzuführen. Eine derartige Ausgestaltung ist jedoch nicht bevorzugt. Denn in diesem Fall sammeln sich im Sammelbehälter die unterschiedlichsten Materialien an, so dass sie später auf umständliche Weise getrennt werden müssen. Es ist bereits erheblich besser, entferntes, nicht aufgeschmolzenes Pulver 11 wieder zurück in den korrespondierenden Vorratsbehälter 12 zu führen. Denn in diesem Fall erfolgt kein Vermischen der verschiedenen entfernten Pulver 11. Besonders bevorzugt ist jedoch, wenn die Vorrichtung für jedes Material je einen eigenen Aufnahmebehälter 15 aufweist. Bei dieser Ausgestaltung wird in dem Fall, dass die entfernten Pulver 11 geringfügig verunreinigt sind, das im jeweiligen Vorratsbehälter 12 befindliche Pulver 11 nicht verunreinigt.

Schließlich weist die Vorrichtung eine Steuereinrichtung 16 auf, welche die übrigen Komponenten 3, 6, 12 bis 15 der Vorrichtung steuert und gegebenenfalls überwacht (beispielsweise auf ordnungsgemäßes Funktionieren oder auf zu hohen/zu geringen Füllstand von Aufnahmebehältern 15 und Vorratsbehältern 12). Die Steuereinrichtung 16 bestimmt die Wirkungsweise der gesamten Vorrichtung.

Die Steuereinrichtung 16 ist in der Regel als softwareprogrammierbare Steuereinrichtung ausgebildet. Sie führt daher im Betrieb ein Computerprogramm 17 aus, das der Steuereinrichtung 16 auf geeignete Weise zugeführt wird, beispielsweise über das Internet 18, ein anderes Rechnernetz oder einen Datenträger 19, auf dem das Computerprogramm 17 gespeichert ist. Beispiele geeigneter Datenträger 19 sind eine Speicherkarte, ein USB-Memorystick, ein steckbares Flash-EPROM oder - wie in FIG 1 schematisch dargestellt - eine CD-ROM.

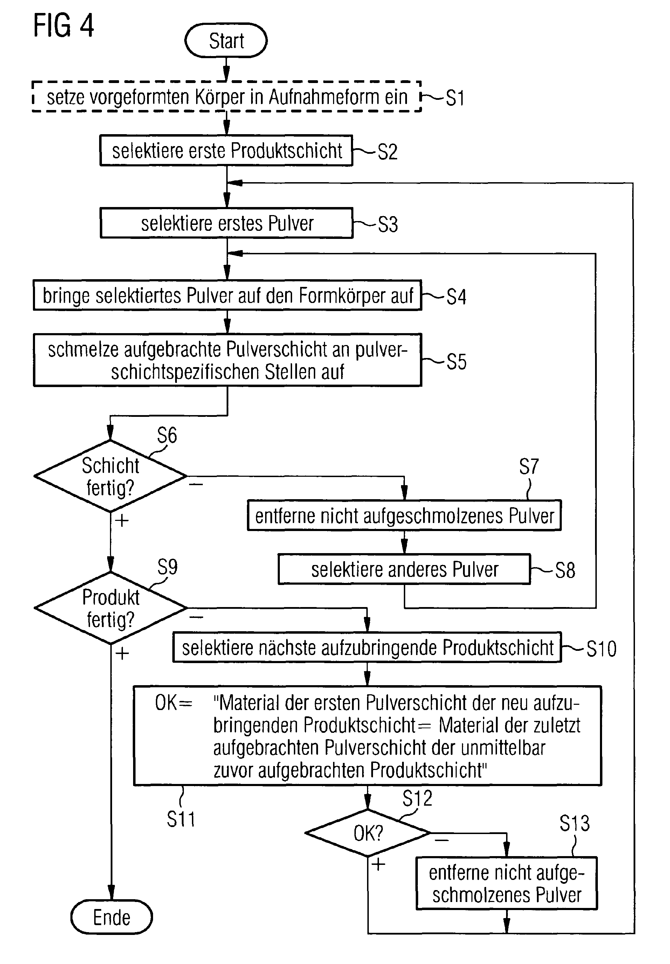

Das Computerprogramm 17 enthält Maschinencode 20. Der Maschinencode 20 ist von der Steuereinrichtung 16 unmittelbar ausführbar. Die Ausführung des Maschinencodes 20 durch die Steuereinrichtung 16 bewirkt, dass die Steuereinrichtung 16 die Vorrichtung von FIG 1 so betreibt, wie dies nachfolgend in Verbindung mit FIG 4 näher erläutert wird.

Der Formkörper 1 kann ursprünglich ein vorgeformter Körper 21 gewesen sein, der vor dem Ausführen des erfindungsgemäßen Verfahrens auf andere Weise hergestellt worden ist, beispielsweise durch Gießen (siehe FIG 2) oder durch Zerspanen, insbesondere durch Drehen (siehe FIG 3). In diesem Fall wird der vorgeformte Körper 21 gemäß FIG 4 in einem Schritt S1 in die Aufnahmeform 3 eingesetzt. Das Einsetzen kann manuell durch einen Anwender erfolgen (nicht dargestellt). Vorzugsweise erfolgt es jedoch automatisch auf Grund entsprechender Steuerung durch die Steuereinrichtung 16.

Der Schritt S1 ist nur optional. Er kann entfallen. Aus diesem Grund ist der Schritt S1 in FIG 4 nur gestrichelt dargestellt.

In einem Schritt S2 wird die erste Produktschicht 2 ausgewählt. Das Auswählen der ersten Produktschicht 2 kann beispielsweise bewirken, dass der Boden 4 der Aufnahmeform 3 auf eine vorbestimmte Höhe abgesenkt wird.

In einem Schritt S3 wird ein erstes Pulver 11 ausgewählt. Das ausgewählte Pulver 11 wird mittels der Aufbringeinrichtung 6 in einem Schritt S4 auf den Formkörper 1 aufgebracht. Es wird also im Rahmen des Schrittes S4 auf den Formkörper 1 die entsprechende Pulverschicht 7 aufgebracht. Beispielsweise kann, wie bereits erwähnt, die Aufnahmeform 3 bis zum Rand 8 mit dem ausgewählten Pulver 11 gefüllt werden.

In einem Schritt S5 wird die erste Pulverschicht 7 mittels des Lasers 13 aufgeschmolzen. Das Aufschmelzen erfolgt hierbei nur an Stellen, an denen die erste Produktschicht 2 aus dem Material des momentan aufgebrachten Pulvers 11 bestehen soll.

In einem Schritt S6 wird geprüft, ob die ausgewählte Produktschicht 2 fertiggestellt ist. Wenn dies nicht der Fall ist, geht die Steuereinrichtung 16 zu Schritten S7 und S8 über. Im Schritt S7 wird das nicht aufgeschmolzene Pulver 11 entfernt.

Im Schritt S8 wird ein anderes Pulver 11 selektiert. Wichtig ist hierbei, dass das neu selektierte Pulver 11 aus einem anderen Material besteht als das unmittelbar zuvor selektierte Pulver 11, das bereits teilweise aufgeschmolzen wurde. Sodann geht die Steuereinrichtung 16 zum Schritt S4 zurück. Bei der erneuten Abarbeitung des Schrittes S5 wird hierbei das neu aufgebrachte Pulver 11 nur an Stellen aufgeschmolzen, die zu allen Stellen aller zuvor aufgebrachten Materialien der jeweiligen Produktschicht 2 disjunkt sind. Die im Rahmen der einmaligen Abarbeitung des Schrittes S3 und der wiederholten Abarbeitung der Schritte S4 bis S8 aufgeschmolzenen Materialien befinden sich also alle zwar innerhalb derselben Produktschicht 2, jedoch an voneinander verschiedenen Stellen, so dass pro Stelle maximal ein Material aufgeschmolzen ist.

Wenn im Rahmen des Schrittes S6 hingegen festgestellt wird, dass die Produktschicht 2 vollständig aufgebracht ist, geht die Steuereinrichtung 16 zu einem Schritt S9 über. Im Schritt S9 prüft die Steuereinrichtung 16, ob das herzustellende Produkt bereits fertig hergestellt ist. Falls dies der Fall sein sollte, ist das erfindungsgemäße Verfahren beendet. Anderenfalls setzt die Steuereinrichtung 16 das erfindungsgemäße Verfahren mit einem Schritt S10 fort.

Im Schritt S10 selektiert die Steuereinrichtung 16 die nächste aufzubringende Produktschicht 2. In einem Schritt S11 ermittelt die Steuereinrichtung 16 den Wert einer logischen Variablen OK. Die logische Variable OK nimmt den Wert WAHR dann und nur dann an, wenn das Material der ersten Pulverschicht 7 der neu aufzubringenden Produktschicht 2 mit dem Material der zuletzt aufgebrachten Pulverschicht 7 der unmittelbar zuvor aufgebrachten Produktschicht 2 identisch ist.

In einem Schritt S12 prüft die Steuereinrichtung 16 den Wert der logischen Variablen OK. Je nach Ergebnis der Prüfung wird entweder direkt oder über einen Schritt S13 zum Schritt S3 zurückgegangen. Falls der Schritt S13 ausgeführt wird, wird das momentan in der Aufnahmeform 3 befindliche Pulver 11, das nicht aufgeschmolzen wurde, aus der Aufnahmeform 3 entfernt.

Aus den obenstehenden Ausführungen ist ersichtlich, dass das Entfernen bereits aufgebrachten Pulvers 11 entfallen kann, wenn beim Übergang von einer Produktschicht 2 zur nächsten Produktschicht 2 die aufzubringenden Materialien gleich sind. Aus diesem Grund wird die Reihenfolge, in der die einzelnen Pulverschichten 7 einer Produktschicht 2 aufgebracht werden, möglichst so gewählt, dass sich diese Übereinstimmung ergibt. Es kann jedoch aus übergeordneten technologischen Gründen erforderlich sein, von dieser Vorgehensweise abzugehen.

Die Vorgehensweise von FIG 4 ist ersichtlich unabhängig von der Anzahl an Materialien, aus denen die Produktschichten 2 jeweils bestehen. Einzelne der Produktschichten 2 können daher aus einem einzigen Material bestehen. Die meisten der Produktschichten bestehen hingegen aus mehreren Materialien, z. B. aus 2, 3 oder 4 Materialien.

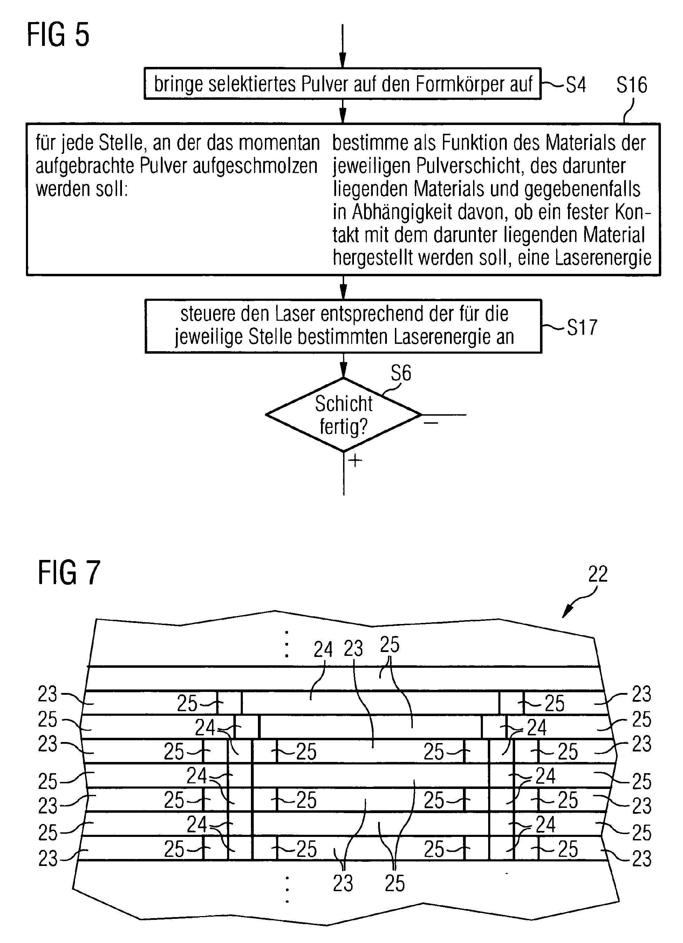

FIG 5 zeigt exemplarisch eine mögliche Ausgestaltung des Schrittes S5 von FIG 4.

Gemäß FIG 5 bestimmt die Steuereinrichtung 16 in einem Schritt S16 für jede Stelle, an der das momentan aufgebrachte Pulver 11 aufgeschmolzen werden soll, eine Laserenergie, mit welcher der Laser 13 die Pulverschicht 7 an dieser Stelle bestrahlen soll. Die Bestimmung ist auf eine geeignete Flächeneinheit bezogen, z. B. 1 mm². Sie erfolgt als Funktion des Materials der jeweiligen Pulverschicht 7, des darunter liegenden Materials und gegebenenfalls in Abhängigkeit davon, ob ein fester Kontakt mit dem darunter liegenden Material hergestellt werden soll oder nicht. In einem Schritt S17 steuert die Steuereinrichtung 16 sodann den Laser 13 für jede Stelle entsprechend der für die jeweilige Stelle bestimmten Laserenergie an.

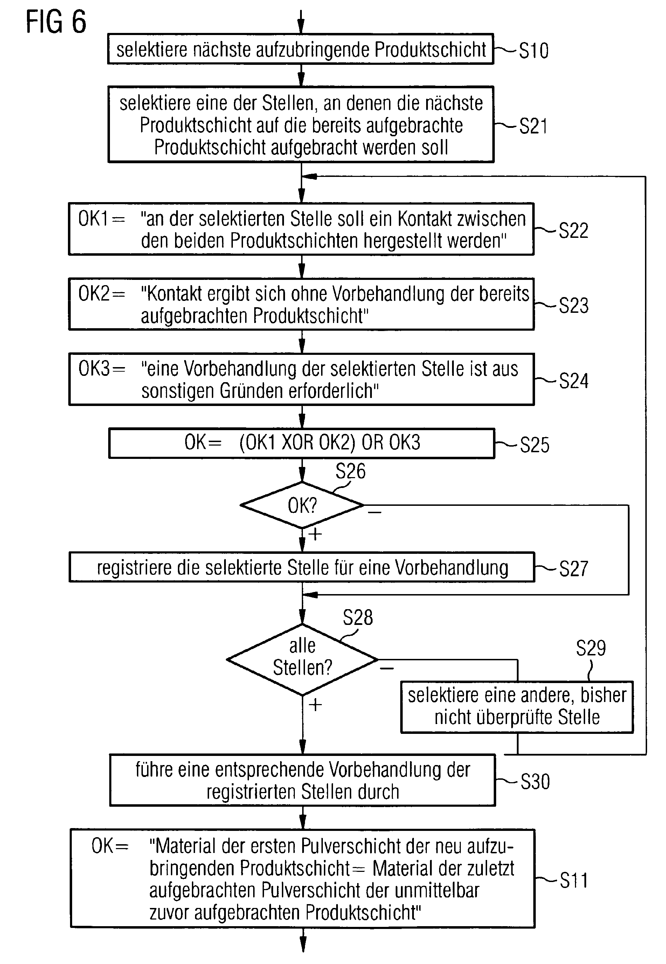

FIG 6 zeigt eine mögliche Modifikation des Verfahrens von FIG 4. Der Schritt S5 kann hierbei entsprechend FIG 4 oder entsprechend FIG 5 ausgestaltet sein.

Gemäß FIG 6 sind dem Schritt S10 Schritte S21 bis S30 nachgeordnet. Die Schritte S21 bis S30 sind hierbei gemäß FIG 6 dem Schritt S10 unmittelbar nachgeordnet. Sie könnten jedoch alternativ auch nach dem Schritt S11 oder vor dem Rücksprung zum Schritt S3 ausgeführt werden.

Gemäß FIG 6 selektiert die Steuereinrichtung 16 zunächst im Schritt S21 eine der Stellen, an denen die nächste Produktschicht 2 auf die bereits aufgebrachte Produktschicht 2 aufgebracht werden soll. Sodann ermittelt die Steuereinrichtung 16 in den Schritten S22 bis S24 drei logische Variable OK1, OK2 und OK3. Die logische Variable OK1 nimmt hierbei den Wert WAHR dann und nur dann an, wenn an der selektierten Stelle ein Kontakt zwischen den beiden Produktschichten 2 hergestellt werden soll. Die logische Variable OK2 nimmt den Wert dann und nur dann an, wenn sich ein derartiger Kontakt ohne Vorbehandlung der bereits aufgebrachten Produktschicht 2 ergibt. Die logische Variable OK3 nimmt den Wert WAHR dann und nur dann an, wenn aus sonstigen Gründen eine Vorbehandlung der selektierten Stelle erforderlich ist.

Im Schritt S25 ermittelt die Steuereinrichtung 16 sodann den Wert der logischen Variablen OK gemäß der im Schritt S25 angegebenen logischen Beziehung. Diese Verknüpfung bewirkt, dass die logische Variable OK den Wert WAHR dann und nur dann annimmt,
- wenn ein Kontakt gewünscht ist, jedoch ohne Vorbehandlung nicht zu erreichen ist,
- wenn kein Kontakt gewünscht ist, sich ohne Vorbehandlung jedoch ein Kontakt ergeben würde, oder
- wenn aus sonstigen Gründen eine Vorbehandlung erforderlich ist.

Im Schritt S26 überprüft die Steuereinrichtung 16 den Wert der logischen Variablen OK. Wenn die logische Variable OK den Wert WAHR aufweist, wird die selektierte Stelle im Schritt S27 für eine Vorbehandlung registriert. Die Art der Vorbehandlung kann hierbei gegebenenfalls von den Materialien der bereits aufgebrachten Produktschicht 2 und der neu aufzubringenden Pulverschicht 7 sowie davon abhängen, welche der logischen Variablen OK1 bis OK3 welchen Wert aufweisen.

Im Schritt S28 prüft die Steuereinrichtung 16, ob sie die Schritte S22 bis S27 bereits für alle Stellen der neu aufzubringenden Produktschicht 2 ausgeführt hat. Wenn dies nicht der Fall ist, geht die Steuereinrichtung 16 zum Schritt S29 über, in dem sie eine andere, bisher nicht überprüfte Stelle der neu aufzubringenden Produktschicht 2 selektiert. Anderenfalls geht die Steuereinrichtung 16 zum Schritt S30 über, in dem sie eine entsprechende Vorbehandlung der im Schritt S27 registrierten Stellen durchführt. Die Vorbehandlung kann beispielsweise eine Bestrahlung durch den Laser 13 oder ein Aufbringen eines dünnen Films sein. Das Aufbringen des dünnen Films kann beispielsweise durch Sputtern, auf galvanische Weise oder durch elektrostatische Weise erfolgen. Die Vorrichtung von FIG 1 muss zu diesem Zweck selbstverständlich entsprechend ausgestaltet sein.

FIG 7 zeigt - rein beispielhaft - einen Ausschnitt eines elektrischen Aktivteils 22, das auf erfindungsgemäße Weise hergestellt wurde. Bei dem elektrischen Aktivteil 22 kann es sich beispielsweise um den Stator oder den Rotor eines Elektromotors handeln. Alternativ kann es sich um einen Transformator handeln.

Gemäß FIG 7 weist das elektrische Aktivteil 22 (d.h., das fertige Produkt 22) eine Vielzahl von Produktschichten 2 auf. Manche der Produktschichten 2 können aus nur einem oder aus zwei Materialien bestehen. Viele der Produktschichten 2 bestehen jedoch aus drei Materialien, nämlich aus Eisen 23, Kupfer 24 und Kunststoff 25. Die Stellen, an denen Eisen 23 vorhanden ist, entsprechen Blechen eines auf konventionelle Weise hergestellten Aktivteils. Die Stellen, an denen Kupfer 24 vorhanden ist, entsprechend der Wicklung des konventionellen Aktivteils. Die Stellen, an denen Kunststoff 25 vorhanden ist, entsprechen einer Vergussmasse und einer Aderisolierung einer konventionellen Wicklung.

Aus FIG 7 ist ersichtlich, dass bei der Herstellung des elektrischen Aktivteils 22 von FIG 7 erheblich größere Freiheitsgrade bestehen als im Stand der Technik. Insbesondere können die Eisenbestandteile derart angeordnet sein, dass die in sich zusammenhängenden Eisenschichten dreidimensional geformt sind.

Die vorliegende Erfindung weist viele Vorteile auf. So ist sie beispielsweise sehr flexibel handhabbar. Denn es muss lediglich an den Stellen, an denen eine gewisse Materialeigenschaft gewünscht wird, ein entsprechend kleines Materialpartikel aufgebracht und aufgeschmolzen werden. Durch eine Vielzahl derartiger Materialpartikel sind nahezu beliebige Geometrien erzeugbar. Weiterhin werden bei der vorliegenden Erfindung unbeabsichtigte Hohlräume (Lunker) und Einschlüsse vermieden. Weiterhin ergibt sich eine hohe Fertigungsgenauigkeit.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Computerprogramm für eine Steuereinrichtung (16) für eine Vorrichtung zum sequentiellen Aufbringen von aus jeweils einer Anzahl von Materialien bestehenden Produktschichten (2) auf einen Formkörper (1),
- wobei das Computerprogramm Maschinencode (20) enthält, der von der Steuereinrichtung (16) unmittelbar ausführbar ist,
- wobei die Ausführung des Maschinencodes (20) durch die Steuereinrichtung (16) bewirkt, dass die Steuereinrichtung (16) die Vorrichtung derart betreibt,
- dass zum Aufbringen einer jeweiligen Produktschicht (2) auf den Formkörper (1) nacheinander jeweils eine aus einem jeweiligen Material bestehende Pulverschicht (7) aufgebracht wird und die aufgebrachte Pulverschicht (7) an Stellen, an denen die jeweilige Produktschicht (2) aus dem jeweiligen Material bestehen soll, mittels eines Lasers (13) der Vorrichtung aufgeschmolzen wird,
- dass das Aufbringen einer aus einem jeweiligen Material bestehenden Pulverschicht (7) und deren Aufschmelzen mit einem jeweils neuen Material wiederholt wird, bis die jeweilige Produktschicht (2) fertiggestellt ist,
- dass vor dem Aufbringen eines von dem aufgeschmolzenen Material verschiedenen Materials nicht aufgeschmolzenes Pulver (11) des bereits aufgebrachten jeweiligen Materials entfernt wird und
- dass innerhalb jeder Produktschicht (2) die Stellen, an denen voneinander verschiedene Materialien aufgebracht werden, zueinander disjunkt sind,
- wobei die Ausführung des Maschinencodes (2) durch die Steuereinrichtung (16) weiterhin bewirkt,
- dass die Steuereinrichtung (16) prüft, ob die zuerst aufzubringende Pulverschicht (7) einer jeweiligen Produktschicht (2) aus demselben Material besteht wie die zuletzt aufgebrachte Produktschicht (2) und
- dass bejahendenfalls das Pulver (11) der zuerst aufzubringenden Pulverschicht (7) einer jeweiligen Produktschicht (2) aufgebracht wird, ohne zuvor das nicht aufgeschmolzene Pulver (11) der zuletzt aufgebrachten Pulverschicht (7) der unmittelbar zuvor aufgebrachten Produktschicht (2) zu entfernen.

2. Computerprogramm nach Anspruch 1, **dadurch gekennzeichnet, dass** die Reihenfolge, in der die einzelnen Pulverschichten (7) aufgebracht werden, möglichst derart gewählt wird, dass die zuerst aufgebrachte Pulverschicht (7) einer jeweiligen Produktschicht (2) aus demselben Material besteht wie die zuletzt aufgebrachte Pulverschicht (7) der unmittelbar zuvor aufgebrachten Produktschicht (2).

3. Computerprogramm nach einem der obigen Ansprüche, **dadurch gekennzeichnet, dass** die Ausführung des Maschinencodes (20) durch die Steuereinrichtung (16) bewirkt, dass der Laser (13) die jeweiligen Pulverschichten (7) zum Aufschmelzen mit einer auf das Material der jeweiligen Pulverschicht (7) abgestimmten Laserenergie bestrahlt.

4. Computerprogramm nach einem der obigen Ansprüche, **dadurch gekennzeichnet, dass** die Ausführung des Maschinencodes (20) durch die Steuereinrichtung (16) bewirkt, dass die Steuereinrichtung (16) vor dem Aufbringen jeder Pulverschicht (7) für jede Stelle, an denen die jeweilige Pulverschicht (7) aufgeschmolzen werden soll, prüft, ob eine Vorbehandlung der jeweiligen Stelle erforderlich ist, und in Abhängigkeit von dem Ergebnis der Prüfung eine entsprechende Vorbehandlung der jeweiligen Stelle vorgenommen wird.

5. Computerprogramm nach Anspruch 4, **dadurch gekennzeichnet, dass** die Vorbehandlung für mindestens eine Stelle in Abhängigkeit davon vorgenommen wird, ob die an der jeweiligen Stelle aufzuschmelzende Pulverschicht (7) sich mit dem darunter liegenden Material verbinden soll oder nicht.

6. Computerprogramm nach Anspruch 4 oder 5, **dadurch gekennzeichnet , dass** die Vorbehandlung eine Bestrahlung durch den Laser (13) ist.

7. Computerprogramm nach Anspruch 4 oder 5, **dadurch gekennzeichnet , dass** die Vorbehandlung ein Aufbringen eines dünnen Films ist.

8. Steuereinrichtung für eine Vorrichtung zum sequentiellen Aufbringen von jeweils aus einer Anzahl von Materialien bestehenden Produktschichten (2) auf einen Formkörper (1), **dadurch gekennzeichnet, dass** die Steuereinrichtung mit einem Computerprogramm (17) nach einem der Ansprüche 1 bis 7 programmiert ist.

9. Vorrichtung zum sequentiellen Aufbringen von Produktschichten (2) auf einen Formkörper (1),
- wobei die Vorrichtung eine Aufnahmeform (3) aufweist, in der sich der Formkörper (1) während des Aufbringens der Produktschichten (2) befindet,
- wobei die Vorrichtung eine Aufbringeinrichtung (6) aufweist, mittels derer im Betrieb der Vorrichtung auf den Formkörper (1) eine aus einem jeweiligen Material bestehende Pulverschicht (7) aufgebracht wird,
- wobei die Vorrichtung einen Laser (13) aufweist, mittels dessen im Betrieb der Vorrichtung die jeweils aufgebrachte Pulverschicht (7) an Stellen, an denen die jeweilige Produktschicht (2) aus dem jeweiligen Material bestehen soll, aufgeschmolzen wird,
- wobei die Vorrichtung eine Säuberungseinrichtung (14) aufweist, mittels derer im Betrieb der Vorrichtung nicht aufgeschmolzenes Pulver (11) entfernt wird,
- wobei die Vorrichtung eine Mehrzahl von Vorratsbehältern (12) für Pulver (11) je eines Materials aufweist, aus denen die Aufbringeinrichtung (6) selektiv beschickbar ist,
- wobei die Vorrichtung eine Steuereinrichtung (16) aufweist, die gemäß Anspruch 8 ausgebildet ist.

## Claims

1. Computer program for a control facility (16) for an apparatus for sequentially applying product layers (2) consisting of a number of materials in each instance to a mould (1),
- wherein the computer program contains machine code (2) which can be executed directly by the control facility (16),
- wherein the execution of the machine code (20) by the control facility (16) results in the control facility (16) operating the apparatus such that
- in order to apply a respective product layer (2) on the mould (1), a layer of powder (7) consisting in each instance of a respective material is applied consecutively and the applied layer of powder (7) is fused by means of a laser (13) of the apparatus at the points at which the respective product layer (2) is to consist of the respective material,
- the application of a layer of powder (7) consisting of a respective material and its fusing with a respectively new material is repeated until the respective product layer (2) is produced,
- prior to applying a material which differs from the fused material, unfused powder (11) of the already applied respective material is removed and
- within each product layer (2), the points at which materials which differ from one another are applied, are disjoint from one another,
- wherein the execution of the machine code (2) by the control facility (15) also results in
- the control facility (16) checking whether the layer of powder (7) of a respective product layer (2) to be applied first consists of the same material as the product layer (2) applied last and
- if so, the powder (11) of the layer of powder (7) to be applied first of a respective product layer (2) is applied without removing the unfused powder (11) of the layer of powder (7) applied last of the product layer (2) applied immediately beforehand.

2. Computer program according to claim 1, **characterized in that** the sequence in which the individual layers of powder (7) are applied, is preferably selected such that the layer of powder (7) applied first of a respective product layer (2) consists of the same material as the layer of powder (7) applied last of the product layer (2) applied immediately beforehand.

3. Computer program according to one of the above claims, **characterized in that** the execution of the machine code (20) by the control facility (16) results in the laser (13) irradiating the respective layers of powder (7) for fusion with a laser energy attuned to the material of the respective layer of powder (7).

4. Computer program according to one of the preceding claims, **characterized in that** the execution of the machine code (20) by the control facility (16) results in the control facility (16) checking, prior to the application of each layer of powder (7) for each point at which the respective layer of powder (7) is to be fused, whether a pretreatment of the respective point is necessary and as a function of the result of the check, a corresponding pretreatment of the respective point is performed.

5. Computer program according to claim 4, **characterized in that** the pretreatment for at least one point is performed as a function of whether or not the layer of powder (7) to be fused at the respective point is to connect to the material disposed therebelow.

6. Computer program according to claim 4 to 5, **characterized in that** the pretreatment involves irradiation by mean of the laser (13).

7. Computer program according to claim 4 or 5, **characterized in that** the pretreatment involves applying a thin film.

8. Control facility for an apparatus for sequentially applying product layers consisting in each instance of a number of materials to a mould (1), **characterized in that** the control facility is programmed with a computer program (17) as claimed in one of claims 1 to 7.

9. Apparatus for sequentially applying product layers (2) to a mould (1),
- wherein the apparatus has a moulded shape (3) which the mould (1) takes during application of the product layers (2),
- wherein the apparatus has an application facility (6), by means of which during operation of the apparatus a layer of powder (7) consisting of a respective material is applied to the mould (1),
- wherein the apparatus has a laser (13), by means of which during operation of the apparatus the respectively applied layer of powder (7) is fused at points at which the respective product layer (2) is to consist of the respective material,
- wherein the apparatus has a cleaning facility (14), by means of which powder (11) which has not fused during operation of the apparatus is removed,
- wherein the apparatus comprises a plurality of storage containers (12) for powder (11) of a material in each instance, from which the application facility (6) can be selectively loaded,
- wherein the apparatus has a control facility (16), which is embodied according to claim 8.

## Revendications

1. Programme d'ordinateur pour un dispositif (16) de commande d'une installation de dépôt séquentiel de couches (2) de produit constituées respectivement d'un certain nombre de matériaux sur un corps (1) moulé,
- dans lequel le programme informatique contient un code (20) machine, qui peut être réalisé directement par le dispositif (16) de commande,
- dans lequel la réalisation du code (20) machine par le dispositif (16) de commande fait que le dispositif (16) de commande fait fonctionner l'installation de manière
- à ce que pour le dépôt d'une couche (2) de produit respective sur le corps (1) moulé, il est déposé successivement respectivement une couche (7) de poudre constituée d'un matériau respectif et la couche (7) de poudre déposée est, aux endroits où la couche (2) de produit respective doit être constituée du matériau respectif, fondue au moyen d'un laser (13) de l'installation,
- à ce que le dépôt d'une couche (7) de poudre constituée d'un matériau respectif et sa fusion soit renouvelée avec respectivement un matériau nouveau, jusqu'à ce que la couche (2) de produit respective soit finie,
- à ce qu'avant le dépôt d'un matériau différent du matériau fondu, on élimine de la poudre (11) non fondue du matériau respectif déjà déposé et
- en ce que au sein de chaque couche (2) de production, les endroits où des matériaux différents les uns des autres ont été déposés sont disjoints les uns des autres,
- dans lequel l'exécution du code (2) machine par le dispositif (16) de commande fait en outre,
- que le dispositif (16) de commande contrôle, si la couche (7) de poudre déposée en premier d'une couche (2) de produit respectif est constituée en le même matériau que la couche (2) de produit déposée en dernier et
- que, dans l'affirmative, la poudre (11) de la couche (7) de poudre à déposer en premier d'une couche (2) de produit respective est déposée sans avoir auparavant éliminé la poudre (11) non fondue de la couche (7) de poudre déposée en dernier de la couche (2) de produit déposée juste auparavant.

2. Programme d'ordinateur suivant la revendication 1, **caractérisé en ce que** l'ordre dans lequel les diverses couches (7) de poudre sont déposées est choisi autant que possible, de manière à ce que la couche (7) de poudre déposée en premier d'une couche (2) de produit respective soit en le même matériau que la couche (7) de poudre déposée en dernier de la couche (2) de produit déposée juste auparavant.

3. Programme d'ordinateur suivant l'une des revendications précédentes, **caractérisé en ce que** la réalisation du code (20) machine par le dispositif (7) de commande fait que le laser (13) soumet les couches (7) de poudre respectives à la fusion avec une énergie laser adaptée au matériau de la couche (7) de poudre respective.

4. Programme d'ordinateur suivant l'une des revendications précédentes, **caractérisé en ce que** la réalisation du code (20) machine par le dispositif (16) de commande fait que le dispositif (16) de commande contrôle avant le dépôt de chaque couche (7) de poudre, pour chaque endroit où la couche (7) de poudre respective doit être fondue, si un traitement préalable de l'endroit respectif est nécessaire et, en fonction du résultat du contrôle, un traitement préalable correspondant de l'endroit respectif est effectué.

5. Programme d'ordinateur suivant la revendication 4, **caractérisé en ce que** le traitement préalable d'au moins un endroit est effectué en fonction du point de savoir, si la couche (7) de poudre à fondre à l'endroit respectif doit ou non être reliée au matériau sous-jacent.

6. Programme d'ordinateur suivant la revendication 4 ou 5, **caractérisé en ce que** le traitement préalable est une exposition au rayonnement du laser (13).

7. Programme d'ordinateur suivant la revendication 4 ou 5, **caractérisé en ce que** le traitement préalable est un dépôt d'une pellicule mince.

8. Dispositif de commande d'une installation de dépôt séquentiel de respectivement des couches (2) de produit constituées d'un certain nombre de matériaux sur un corps (1) moulé, **caractérisé en ce que** le dispositif de commande est programmé par un programme (17) d'ordinateur suivant l'une des revendications 1 à 7.

9. Installation de dépôt séquentiel de couches (7) de produit sur un corps (1) moulé,
- dans laquelle l'installation a un moule (3) de réception, dans lequel le corps (1) moulé se trouve pendant le dépôt des couches (2) de produit,
- dans laquelle l'installation a un dispositif (6) de dépôt, au moyen duquel lorsque l'installation fonctionne, une couche (7) de poudre en le matériau respectif est déposée sur le corps (1) moulé,
- dans laquelle l'installation a un laser (13), au moyen duquel lorsque l'installation fonctionne, la couche (7) de poudre déposée respectivement est fondue aux endroits où la couche (7) de produit respectif doit être constituée du matériau respectif,
- dans laquelle l'installation a un dispositif (4) de nettoyage, au moyen duquel, lorsque l'installation fonctionne, de la poudre (11) non fondue est éliminée,
- dans laquelle l'installation a une multiplicité de réservoirs (12) de poudre (11) de respectivement un matériau, à partir desquels le dispositif (6) de dépôt peut être alimenté sélectivement,
- dans laquelle l'installation a un dispositif (16) de commande, qui est constitué suivant la revendication 8.
